(19)

Europäisches
Patentamt
European
Patent Office
Office européen
des brevets

(11) **EP 3 760 975 A1**

(12) **EUROPEAN PATENT APPLICATION**

(43) Date of publication:
06.01.2021 Bulletin 2021/01

(21) Application number: 20181580.0

(22) Date of filing: 23.06.2020

(51) Int Cl.:
*G01C 21/30* (2006.01)     *G01C 21/00* (2006.01)
*G08G 1/01* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.06.2019   US 201916452056**

(71) Applicant: **HERE Global B.V.
5611 ZT Eindhoven (NL)**

(72) Inventors:
• **Fowe, James**
  **Chicago, IL Illinois 60606 (US)**
• **Yallapantula, Harsh**
  **East Windsor, NJ New Jersey 08520 (US)**

(74) Representative: **Potter Clarkson
The Belgrave Centre
Talbot Street
Nottingham NG1 5GG (GB)**

(54) **METHOD AND APPARATUS FOR PROVIDING INFERENTIAL LOCATION ESTIMATION**

(57)     An approach is provided for inferring vehicle location data using a reference vehicle. The approach includes processing sensor data collected from one or more sensors of the reference vehicle to identify a relative location of one or more vehicles represented in the sensor data, wherein the relative location is with respect to the reference vehicle. The approach also includes computing a vehicle location of the one or more vehicles based on the relative location and a reference location of the reference vehicle. The approach also includes providing the vehicle location of the one or more vehicles as an output comprising the inferred vehicle location data.

FIG. 3

FIG. 6A

90º

R

α

**Description**

USING AUTOMOTIVE SENSORSBACKGROUND

Service providers, particularly mapping and navigation service providers, are increasingly relying on probe data (e.g., location point samples or trajectories collected from participating probe vehicles and/or devices) to generate mapping data, determine real-time traffic, and/or provide other location-based services. However, only a small percentage of vehicles operating in road network are probe vehicles that generate probe data. As a result, service providers face significant technical challenges with respect to increase the sampling percentage of probes from vehicles on a road segment.

SOME EXAMPLE EMBODIMENTS

Therefore, there is a need for an approach for providing inferential location estimation using automotive sensors to generate additional probe data for vehicles that are not directly participating as probe or reference vehicles to effectively increase probe density on a given road segment.

According to one embodiment, a method for inferring vehicle location data using a reference vehicle (e.g., a probe vehicle), comprises processing sensor data collected from one or more sensors of the reference vehicle to identify a relative location of one or more vehicles represented in the sensor data (e.g., nearby vehicles visible in images captured using camera or vision sensors mounted on the reference vehicle), wherein the relative location is with respect to the reference vehicle. The method also comprises computing a vehicle location of the one or more vehicles based on the relative location and a reference location of the reference vehicle. The method also comprises providing the vehicle location of the one or more vehicles as an output comprising the inferred vehicle location data.

According to another embodiment, an apparatus for inferring vehicle location data using a reference vehicle comprises at least one processor and at least one memory including computer program code for one or more programs, the at least one memory and the computer program code configured to, with the at least one processor, cause the apparatus to process sensor data collected from one or more sensors of the reference vehicle to identify a relative location of one or more vehicles represented in the sensor data. The relative location is with respect to the reference vehicle. The apparatus is also caused to compute a vehicle location of the one or more vehicles based on the relative location and a reference location of the reference vehicle. The apparatus is also caused to provide the vehicle location of the one or more vehicles as an output comprising the inferred vehicle location data.

According to another embodiment, a computer-readable storage medium for inferring vehicle location data using a reference vehicle, carries one or more sequences of one or more instructions which, when executed by one or more processors, cause an apparatus to process sensor data collected from one or more sensors of the reference vehicle to identify a relative location of one or more vehicles represented in the sensor data. The relative location is with respect to the reference vehicle. The apparatus is also caused to compute a vehicle location of the one or more vehicles based on the relative location and a reference location of the reference vehicle. The apparatus is also caused to provide the vehicle location of the one or more vehicles as an output comprising the inferred vehicle location data.

The following numbered paragraphs are also disclosed:

1. A method for inferring vehicle location data using a reference vehicle comprising:

   processing sensor data collected from one or more sensors of the reference vehicle to identify a relative location of one or more vehicles represented in the sensor data, wherein the relative location is with respect to the reference vehicle;
   computing a vehicle location of the one or more vehicles based on the relative location and a reference location of the reference vehicle; and
   providing the vehicle location of the one or more vehicles as an output comprising the inferred vehicle location data.

2. The method of paragraph 1, wherein the one or more sensors include one or more vision sensors mounted to face one or more directions from the reference vehicle to generate image data, and wherein the sensor data includes the image data.

3. The method of paragraph 2, wherein the one or more vision sensors include one or more stereoscopic vision sensors.

4. The method of paragraph 1, further comprising:

   processing the sensor data to determine an angle of the one or more vehicles with respect to a direction of travel of the reference vehicle,
wherein the vehicle location of the one or more vehicles is further based on the angle.

5. The method of paragraph 1, further comprising:

initiating a map-matching the reference location to a road link of a geographic database,
wherein the vehicle location of the one or more vehicles is further based on the map-matching.

6. The method of paragraph 1, further comprising:

processing the sensor data to determine a reference road lane in which the reference vehicle is traveling; and
computing a travel lane of the one or more vehicles based on the reference road lane of the reference vehicle,
wherein the vehicle location includes the travel lane of the one or more vehicles.

7. The method of paragraph 1, further comprising:
processing the sensor data to predict a traffic volume, vehicle speed data for the one or more vehicles, or a combination thereof based on the sensor data, the reference location of the reference vehicle, reference speed data of the reference vehicle, or a combination thereof.
8. The method of paragraph 1, further comprising:

processing the sensor data to determine a time of a sensor event through which the sensor data was collected,
wherein the inferred vehicle location is time-stamped with the time of the sensor event.

9. The method of paragraph 1, wherein the reference vehicle transmits the reference location of the reference vehicle, the inferred vehicle location data of the one or more vehicles, or a combination thereof as probe data.
10. The method of paragraph 1, wherein the relative location of the one or more vehicles, the one or more vehicles, or a combination thereof is identified from the sensor data using a computer vision machine learning system.
11. An apparatus for inferring vehicle location data using a reference vehicle comprising:

at least one processor; and
at least one memory including computer program code for one or more programs,
the at least one memory and the computer program code configured to, with the at least one processor, cause the apparatus to perform at least the following:

process sensor data collected from one or more sensors of the reference vehicle to identify a relative location of one or more vehicles represented in the sensor data, wherein the relative location is with respect to the reference vehicle;
compute a vehicle location of the one or more vehicles based on the relative location and a reference location of the reference vehicle; and
provide the vehicle location of the one or more vehicles as an output comprising the inferred vehicle location data.

12. The apparatus of paragraph 11, wherein the one or more sensors include one or more vision sensors mounted to face one or more directions from the reference vehicle to generate image data, and wherein the sensor data includes the image data.
13. The apparatus of paragraph 11, wherein the apparatus is further caused to:

process the sensor data to determine an angle of the one or more vehicles with respect to a direction of travel of the reference vehicle,
wherein the vehicle location of the one or more vehicles is further based on the angle.

14. The apparatus of paragraph 11, wherein the apparatus is further caused to:

initiate a map-matching the reference location to a road link of a geographic database,
wherein the vehicle location of the one or more vehicles is further based on the map-matching.

15. The apparatus of paragraph 11, wherein the apparatus is further caused to:

process the sensor data to determine a reference road lane in which the reference vehicle is traveling; and compute a travel lane of the one or more vehicles based on the reference road lane of the reference vehicle, wherein the vehicle location includes the travel lane of the one or more vehicles.

16. A non-transitory computer-readable storage medium for inferring vehicle location data using a reference vehicle, carrying one or more sequences of one or more instructions which, when executed by one or more processors, cause an apparatus to perform:

processing sensor data collected from one or more sensors of the reference vehicle to identify a relative location of one or more vehicles represented in the sensor data, wherein the relative location is with respect to the reference vehicle;
computing a vehicle location of the one or more vehicles based on the relative location and a reference location of the reference vehicle; and
providing the vehicle location of the one or more vehicles as an output comprising the inferred vehicle location data.

17. The non-transitory computer-readable storage medium of paragraph 16, wherein the one or more sensors include one or more vision sensors mounted to face one or more directions from the reference vehicle to generate image data, and wherein the sensor data includes the image data.

18. The non-transitory computer-readable storage medium of paragraph 16, further comprising:

processing the sensor data to determine an angle of the one or more vehicles with respect to a direction of travel of the reference vehicle,
wherein the vehicle location of the one or more vehicles is further based on the angle.

19. The non-transitory computer-readable storage medium of paragraph 16, further comprising:

initiating a map-matching the reference location to a road link of a geographic database,
wherein the vehicle location of the one or more vehicles is further based on the map-matching.

20. The non-transitory computer-readable storage medium of paragraph 16, further comprising:

processing the sensor data to determine a reference road lane in which the reference vehicle is traveling; and
computing a travel lane of the one or more vehicles based on the reference road lane of the reference vehicle,
wherein the vehicle location includes the travel lane of the one or more vehicles.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.
For various example embodiments of the invention, the following is also applicable: a method comprising facilitating access to at least one interface configured to allow access to at least one service, the at least one service configured to perform any one or any combination of network or service provider methods (or processes) disclosed in this application.
For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.
For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is a diagram of a system for inferring vehicle location data using a reference vehicle, according to one embodiment;
FIG. 2 is a diagram of the components of a mapping platform, according to one embodiment;
FIG. 3 is a flowchart of a process for inferring vehicle location data using a reference vehicle, according to one embodiment;
FIG. 4 is a reference vehicle with multiple camera sensors mounted on sides of the reference vehicle, according to one embodiment;
FIGs. 5A and 5B are diagrams illustrating an example of a computer stereo vision algorithm for identifying and locating an inference vehicle;
FIG. 6A is diagram of a reference vehicle alongside an inference vehicle, according to one embodiment;
FIG. 6B is diagram of a reference vehicle alongside an inference vehicle, according to one embodiment;
FIG. 6C is a diagram of a reference vehicle alongside inference vehicles, according to one embodiment;
FIG. 6D is a diagram of a reference vehicle and an inference vehicle crossing an intersection, according to one embodiment;
FIG. 7 is a diagram of a geographic database, according to one embodiment;
FIG. 8 is a diagram of hardware that can be used to implement an embodiment of the invention; and
FIG. 9 is a diagram of a chip set that can be used to implement an embodiment of the invention.

DESCRIPTION OF SOME EMBODIMENTS

Examples of a method, apparatus, and computer program for providing inferential location estimation using a reference vehicle are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

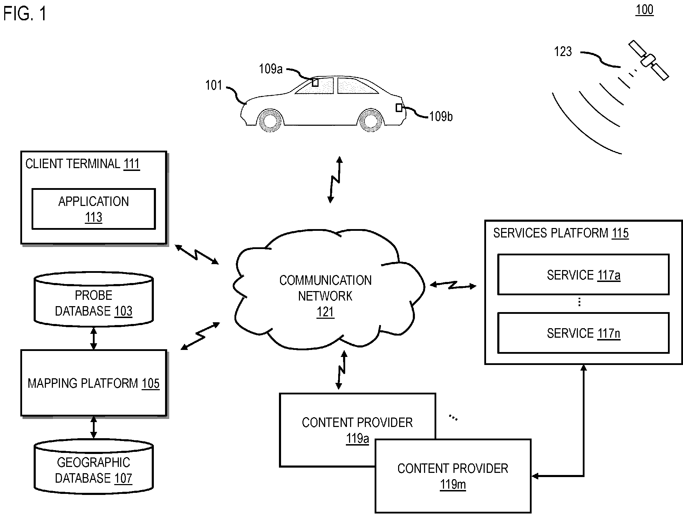

FIG. 1 is a diagram of a system for inferring vehicle location data using a reference vehicle, according to one embodiment. Probes (e.g., sampled location points or trajectories such as Global Positioning System (GPS) or equivalent probe data) used for traffic processing historically only represents a fraction (e.g., 2%) of all vehicles on the road. This limitation results in low probe densities that make it difficult or impossible to provide accurate location-based services and/or applications. In other words, the typical percentage of probe vehicles (e.g., a vehicle 101) contributing probes can be so low that on many road segments there is not enough probe data (e.g., as stored in a probe database 103) from which accurate road conditions or characteristics can be derived (e.g., by a mapping platform 105).

For example, one location-based service or function includes but is not limited to determining the volume of vehicles on a road. Knowing the volume of vehicles on the road can help service providers: (1) identify the efficiency of certain roads; (2) create a speed versus volume graph for roads to help understand and predict patterns; (3) generate mapping data stored in a geographic database 107) and/or the like. One way to determine traffic volume is by use of probe data collected from monitored road segments. However, because of low probe density, service providers face the technical challenge of obtaining enough probe data to accurately determine or predict traffic volume or other similar parameter on certain road segments where there are only a few probe vehicles 101 transmitting probe data.

To address these technical challenges, the system 100 of FIG. 1 introduces a capability to exploit automotive sensors (e.g., camera or vision sensors 109a-109b, also collectively referred to as camera sensors 109) of a reference probe vehicle 101 as a proxy to "see" other vehicles on the road (e.g., other vehicles visible in an image captured by vision sensors 109 of the reference vehicle 101) and use their respective positions (e.g., lateral positions) in the image to estimate/infer their real-world locations. The inferred location estimations of the other vehicles can then be used as additional probes to increase the probe data available for any given road segment. This is approach is referred to as inferential GPS/probe data. In other words, the locations of other vehicles can be detected in images or other sensor data collected by the sensors of 103 of a reference vehicle 101 to generate probes for the other nearby vehicles. In one embodiment, by utilizing automotive sensor data to inferentially increase the amount of available probe data (e.g., the probe database 103), the embodiments described herein enables a range of other possible location-based services and/or applications that have required larger amounts of probe data than have been traditionally available.

In accordance with one embodiment, the system 100 can further be used to understand lane-level traffic volume or other traffic characteristics by using vision sensors 109 to determine the lane of the surrounding vehicles (e.g., relative to the lane of the reference vehicle 101) and/or lane level map matching. Further, with this approach of the embodiments describe herein, the speeds of the surrounding vehicles can be obtained by using the speed of the reference vehicle 101 with the vision sensors 109 as a reference.

In one embodiment, the inferred location estimations (e.g., inferred probes) can be used in a variety of location-based services and applications, including but not limited to the problem of traffic volume. In another example use case, is the inferred location estimations can be used to model traffic flow and patterns, and in turn solve several other related problems such as but not limited to technical challenges associated with predicting traffic congestion and modeling future traffic. Further, by inferring lane level speed and location information of surrounding vehicles, the embodiments described herein make it possible to obtain lane level traffic patterns and lane level volume.

Furthermore, in other embodiments, a reference vehicle 101 (e.g., a vehicle equipped with sensors and communications equipment to collect and transmit probe data and detect nearby inferred vehicles according to the embodiments described herein) can communicate with other reference vehicles 101 around it to make sure the same inferred vehicle is not counted more than once.

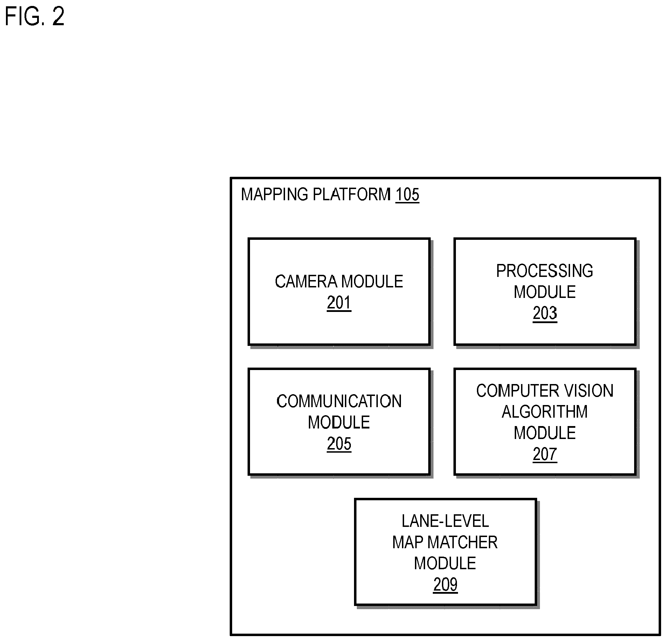

In one embodiment, the system 100 can include a mapping platform 105 for inferring vehicle location data using sensors of a reference vehicle, according to the embodiments described herein. As shown in FIG. 2, the mapping platform 105 includes one or more components such as a camera module 201, a processing module 203, a communication module 205, and a computer vision algorithm module 207 and lane-level map matcher module 209. The above presented modules and components of the mapping platform 105 can be implemented in hardware, firmware, software, or a combination thereof. It is contemplated that the functions of these components may be combined or performed by other components of equivalent functionality. Though depicted as a separate entity in FIG. 1, it is contemplated the mapping platform 105 may be implemented as a module of any of the components of the system 100 (e.g., a client device 111, application 113 executing on the client device 111 or vehicle 101, services platform 115, services 117a-117n of the services platform 115 - also collectively referred to as services 117, content providers 119a-119m - also collectively referred to as content providers 119, etc.). In another embodiment, the mapping platform 105 and/or any of the modules 201-209 may be implemented as a cloud-based service, local service, native application, or combination thereof.

In one embodiment, the processing module 203 manages a reference vehicle location and inferred vehicle location. It is further noted that the communication module 205 facilitates the exchange of real-time location information of the reference and inferred vehicles via the communication network 121 with respect to the services 117, content providers 119 and application 113.

The camera module 201 is associated with camera sensors 109 that capture a series of images at different times and locations. The images can be paired up so that a pair of images from each side of the reference vehicle is obtained. One image in a pair represents a slightly different view from the other image, and this difference can be used to create a disparity map. The disparity map encodes the relative depth of each pixel in the image, and by using a reference point, it allows a calculation of the distance to different objects in the image. In one example, a relative location of the object of concern (e.g., adjacent vehicle) can be determined by finding a difference in the angles from the direction of the cameras of the reference vehicle are facing. The computer vision algorithm facilitates the identification and location of the inferred vehicle. A computer stereo vision algorithm can be used by the module 207. Image data from the camera module 201 can be input into the algorithm module 207 for processing. The LLMM module 209 facilitates the map matching of the reference vehicle which effectively stabilizes the location of the reference vehicle.

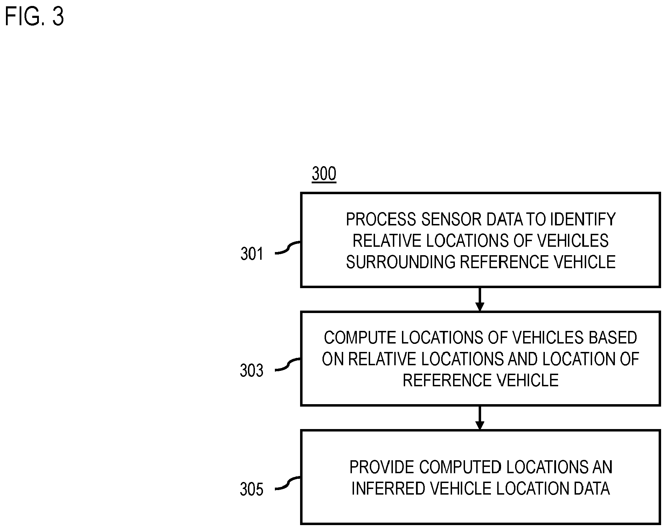

The above presented modules and components of the mapping platform 105 can be implemented in hardware, firmware, software, or a combination thereof. Though depicted as a separate entity in FIG. 1, it is contemplated that the mapping platform 105 may be implemented for direct operation by respective vehicles 101. As such, the mapping platform 105 may generate direct signal inputs by way of the operating system of the vehicles 101 for interacting with the application 113. The functions of the mapping platform 105 and the modules 201-209 are further described with respect to FIGs. 3-6D below.

FIG. 3 is a flowchart of a method for inferring vehicle location data using a reference vehicle. The method includes processing sensor data collected from one or more sensors 109 of the reference vehicle(s) 101 to identify a

7

relative location of one or more vehicles represented in the sensor data. The relative location is with respect to the reference vehicle. The method further includes computing a vehicle location of the one or more vehicles based on the relative location and a reference location of the reference vehicle. The method further includes providing the vehicle location of the one or more vehicles as an output comprising the inferred vehicle location data.

In accordance with certain embodiments, the process 300 can be used to infer a vehicle's location using a reference vehicle 101's vision sensor(s) 103. More specifically, the system 100 obtains the locations of most or all the vehicles on a road by using the vision sensors 109 of one or more reference vehicles 101. When vision sensors 109 of a reference vehicle(s) 101 are used to see in all directions, it becomes possible to decode the location of surrounding vehicle(s) and provide a significant amount of location data (e.g., probe data) that is currently not available for sensor data processing. For example, the additional inferred location data or probe data can enable the system 100 to determine traffic volume on road segments where it was not possible due to low probe density under conventional approaches. As described above, when the volume of vehicles on a road can be accurately determined, this information can be used to identify the efficiency of certain roads and create a speed versus volume graph for roads to help understand and predict traffic patterns. It is noted that determining traffic volume is provided as one example of using the inferred probe data generated according to the process 300 and is not intended as a limitation.

In one embodiment, the process 300 uses various metrics such as but not limited to the angle of the detected surrounding vehicle to the direction of travel, the road link identification, the time of the vision event, and/or the lane number of the reference vehicle 101 in conjunction with computer vision algorithms to provide inferred location estimations of surrounding vehicles to generate additional probe data.

To initiate the process 300, in step 301, sensor data collected from one or more camera sensors 109 of the reference vehicle(s) 101 is processed to identify a relative location of one or more vehicles represented in the sensor data (e.g., one or more other vehicles surrounding or nearby the reference vehicle 101). In certain embodiments, the one or more camera sensors 109 include one or more vision or camera sensors mounted to face one or more directions from the reference vehicle 101 to generate image data. Although the various embodiments described herein are discussed with respect sensors 109 that are vision or camera-based sensors, it is contemplated that the sensors 109 can be based on any technology (e.g., including but not limited to LiDAR, radar, etc.) that is capable of generating sensor data that depicts surrounding vehicles and/or that senses or provides data for determining the relative or real-world locations of the surrounding vehicles.

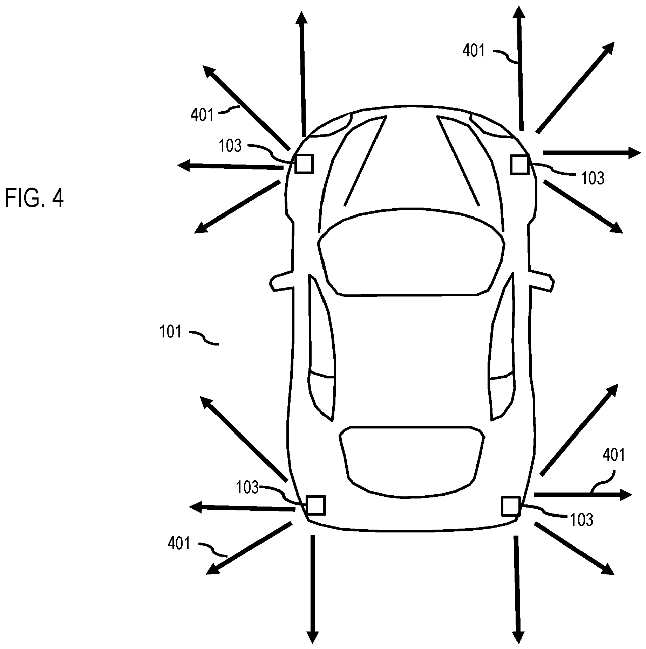

As shown in the embodiment of FIG. 4, in one example sensor mounting arrangement, the reference vehicle 101 includes image or camera sensors 109 mounted to face one or more directions 401 from the reference vehicle 101. The data obtained by the camera sensors 109 include image data. This example arrangement can provide complete sensor field of view coverage around the reference vehicle 101. In other configurations, fewer or more cameras can be used and not all directions need to be covered.

In certain embodiments, the mapping platform 111 can use computer vision techniques such as but not limited machine learning-based feature detectors to segment or classify the image data pixels as corresponding to one or more surrounding vehicles. By way of example, the feature detector can use a convolutional neural network (CNN) algorithm, such as the You Only Look Once (YOLO) Real Time Object Detection Algorithm or equivalent, to process images taken at different times to identify surrounding vehicles. The CNN algorithm is able to train itself on a large database of vehicle images and identify vehicles.

In one embodiment, a computer stereo vision process is used to identify and determine the relative location of surrounding vehicles from image data. As an example (e.g., as illustrated in FIG. 4), one or more stereoscopic image sensors (e.g., pairs of camera or vision sensors) are located on each of the four sides of the vehicle, for a total of four to eight image sensors. The data input that is received from the reference vehicle 101 are a series of images at different times and locations. This data is obtained from the image sensors. In certain examples, the images can be paired up so that a pair of images from each side, e.g., taken by two cameras sensors on each side of the reference vehicle. One image in a pair represents a slightly different view from the other image, and this difference can be used to create a disparity map. The disparity map encodes the relative depth of each pixel in the image, and by using a reference point, it allows a calculation of the distance to different objects in the image. In other words, by looking up the pixels of the captured images of the surrounding vehicle (e.g., classified using a feature detector as described above) using the disparity map, it becomes possible to calculate the precise location of the inferred vehicle(s) relative to the reference vehicle.

In one embodiment, a relative location of the object of concern (e.g., adj acent or nearby vehicle) can be determined by finding a difference in the angles from the direction of the cameras of the reference vehicle are facing. For example, the angle of the surrounding vehicle can be inferred with respect to the direction of travel of reference vehicle 101. The direction of travel of a reference vehicle, for instance, can be determined by map-matching the location of the reference vehicle 101 to a road segment or link and using the difference of the angles between multiple location points of the surrounding vehicle. In certain embodiments, assuming that vision sensors 109 are located on four sides of the vehicle, facing 0°, 90°, 180°, and 270° with respect to the direction of travel, it becomes possible to calculate the angle of the surrounding vehicle from the direction the camera sensor 109 is facing by projecting the image onto a camera plane. This angle is then offset by the difference between the facing direction of the camera sensor 109 and the direction of travel of the reference vehicle 101.

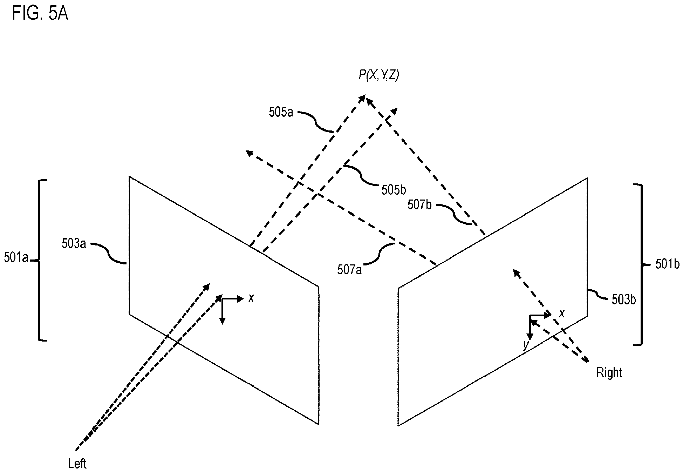

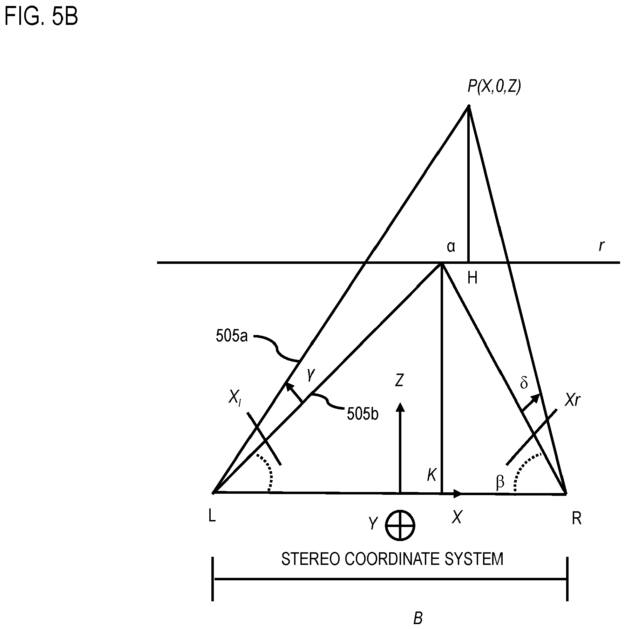

FIGs. 5A and 5B are diagrams illustrating an example of a computer stereo vision algorithm used for identifying and locating an inference vehicle relative to the refence vehicle. To identify and locate a vehicle near a reference vehicle, the mapping platform 105 can use stereo vision processes or equivalent. For example, as discussed above, camera sensors 109 can be located one or more sides of the reference vehicle 101. The data input that is received from the reference vehicle 101 is a series of images captured at different times and locations. In this embodiment, the reference vehicle 101 is equipped with a stereoscopic pair of camera sensors 109. The captured images can be paired up so that a pair of images are obtained, taken by two camera sensors 109 of the reference vehicle 101. One image in a pair represents a slightly different view from the other image, and this difference can be used to create a disparity map. As previously discussed, the disparity map encodes the relative depth of each pixel in the image, and using a reference point, it can allow calculation of the distance to different objects in the image, such as the nearby vehicle or any other object such as road signage, buildings, etc.

With dynamic stereo vision, a cooperative scheme in which both motion and stereo vision can be used to infer scene objects such as vehicles, and also determine free space areas. Binocular disparity, computed on several stereo images over time, is combined with optical flow from the same sequence to obtain a relative-depth map of the scene. The depth scaled by the distance of the camera sensor 109 from the fixation point in space are considered as adequate, relative measurements which are based on the viewer, but centered on the environment. The camera sensors 109 can track a point in space independently of the reference vehicle 101 motion. Stereo vision is a type of machine vision that recreates the human vision system by using two or more 2D views of the same scene to derive 3D depth information about the scene. Depth information can be used to track moving objects in 3D space, such as an inferred vehicle, and gather distance information for scene features, or to construct a 3D spatial model of a scene.

As shown in the example of FIG. 5A, a pair of images 501a and 501b have been captured images (e.g., stereoscopic images or images that different in camera locations) of a nearby vehicle using respective left and right camera sensors 109 mounted on a reference vehicle 101. The relative location (e.g., relative to the reference vehicle 101) of the nearby vehicle or object of concern, located at P as indicated in FIG. 5A, can be determined by finding the differences in the angles from the direction the cameras are facing with respect to the location of the vehicle in the image planes of each of the images 501a and 501b (e.g., labeled gamma (γ) and delta (δ) in FIG. 5B).

In particular, FIG. 5A illustrates the projection of respective camera or image planes 503a and 503b of images 501a (Left image) and 501b (Right image) onto a common or global coordinate system (e.g., stereo coordinate system) so that the images planes 503a and 503b are arranged according to the respective physical orientations of their fields of view. The mapping platform 105 can then generate respective rays 505a and 505b or originating from the Left camera position through image plane 503a to two selected points on the vehicle of interest (e.g., one point being P and another point being another selected location on the vehicle). Similarly, for image 501b, the mapping platform 105 generates respective rays 507a and 507b originating from the Right camera position through image plane 503b to the same two selected points of the vehicle of interest. As shown in the FIG. 5B, rays 505a and 505b form the angle γ and rays 507a and 507b from the angle δ. The mapping platform can then compute relative location of P based on the difference between angles γ and δ.

By way of example, Table 1 below provides example pseudocode for determining the relative location of a vehicle or other object using stereo vision computer depth perception. It is note that the pseudocode of Table 1 is provided by way of illustration and not as a limitation.

```
OpenCv code

#include "cv.h"
#include "highgui.h"
#include "cvaux.h"
#include "stdio.h"


int main (int argc, char ** argv){

        IplImage* srcLeft = cvLoadImage("Cube_left.jpg",1);
        IplImage* srcRight = cvLoadImage("Cube_right.jpg",1);
        IplImage* leftImage = cvCreateImage(cvGetSize(srcLeft),
IPL_DEPTH_8U, 1);
        IplImage* rightImage = cvCreateImage(cvGetSize(srcRight),
IPL_DEPTH_8U, 1);
        IplImage* depthImage = cvCreateImage(cvGetSize(srcRight),
IPL_DEPTH_8U, 1);

        cvCvtColor(srcLeft, leftImage, CV_BGR2GRAY);
        cvCvtColor(srcRight, rightImage, CV_BGR2GRAY);



        cvFindStereoCorrespondence( rightImage, leftImage,
CV_DISPARITY_BIRCHFIELD, depthImage, 255, 15, 8, 4, 8, 15 );

        cvNamedWindow("left", 1);
        cvNamedWindow("right", 1);
        cvNamedWindow("depth", 1);
        cvShowImage("left",leftImage);
        cvShowImage("right",rightImage);
        cvShowImage("depth",depthImage);
        cvWaitKey(0);

        cvSaveImage("depth_output.jpeg",depthImage);

        cvReleaseImage(&depthImage);
        cvReleaseImage(&rightImage);
        cvReleaseImage(&leftImage);
        cvReleaseImage(&srcLeft);
        cvReleaseImage(&srcRight);
        return 0;
}
```

**Table 1**

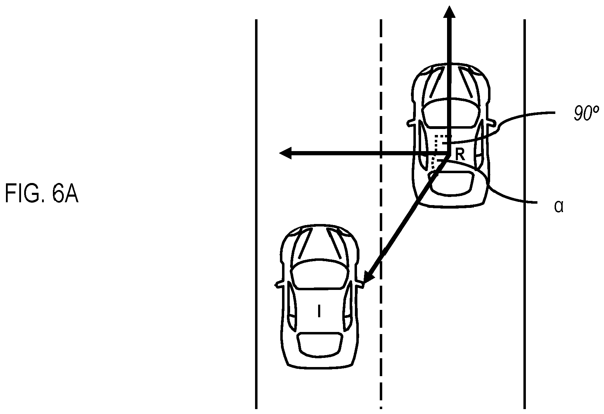

Returning to the process 300, in step 303, a vehicle location (e.g., a real-world location) of the one or more nearby vehicles is computed based on the relative location and a reference location of the reference vehicle 101. The output of step 301 is a relative location that is determined with respect to an offset from the location of the reference vehicle 101. In other words, the relative location indicates the position of the nearby or surrounding vehicle from the reference vehicle 101. To mapping platform 105 can then convert the relative location to a real-world location based on the real-world location of the reference vehicle 101. Thus, the accuracy of the real-world location of the nearby vehicle is dependent on the accuracy of the real-world location of the reference vehicle 101. The conversion of a relative location of a nearby or inferred vehicle to a real-world location based on the reference vehicle 101 is illustrated with respect to FIGs. 6A-6D below.

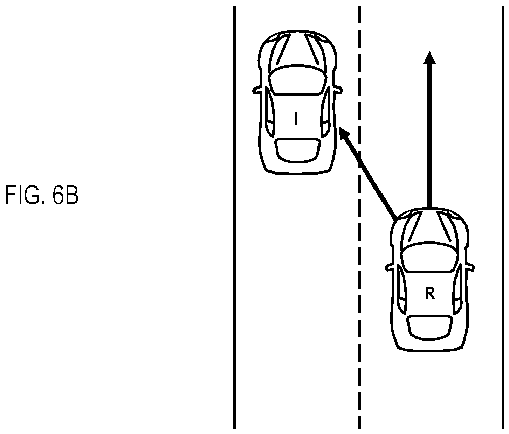

FIG. 6A is a diagram of a reference vehicle R with an inferred vehicle I that is trailing the reference vehicle R in an adjacent lane. FIG. 6B is a diagram of a reference vehicle R with an inferred vehicle I that is traveling ahead of the reference vehicle R in an adjacent lane. The link identification and the lane of the reference vehicle R is determined by using map-matching and lane-level map-matching. The link identification of reference vehicle R can be obtained by map-matching the reference vehicle's location to a road. In one embodiment, after map-matching, an accurate location of the travel lane of reference vehicle which can be obtained with a vision algorithm to determine the lanes of a road. In addition or alternatively, lane level map matching (LLMM) can be used as further describe below.

In one embodiment, images can be processed in real-time at about 45 to 155 frames per second according to embodiments described above with respect to step 301 above. For example, a feature detector (e.g., a trained neural network) can divide the images into regions and predict bounding boxes and probabilities for each region as including pixels depicting a nearby vehicle or not. In one embodiment, these bounding boxes or pixel areas can be weighted by the predicted probabilities. Looking up the pixels of the vehicle using the disparity map, it becomes possible to calculate the precise location of the inferred vehicle(s) relative to the reference vehicle.

The time of the event is also captured when the image is captured. The time of the vision event can be obtained from a clock associated with the camera sensor 109 or the time at which the vision event is uploaded for processing. The reference vehicle R captures images on each of camera or vision sensors 109 of the reference vehicle R. A stereo vision algorithm described above with respect to FIGs. 5A and 5B can be used to calculate the angle and distance to the inferred vehicle I, thereby providing an accurate location relative to the location of vehicle R. In this case, the angle is 90 + $a$ = $\theta$ degrees.

$$long_i = long_r + \cos(\theta) * d$$

$$lat_i = lat_r + \sin(\theta) * d$$

The distance from the reference vehicle R to the inference vehicle I is denoted as $d$. The $lat_i$ and $long_i$ are the latitude and longitude of the inferred vehicle I, while $lat_r$ and $long_r$ are the reference vehicle R coordinates. In one embodiment, a haversine formula or equivalent optionally can be used to calculate the new latitude and longitude (e.g., to improve precision). The haversine formula, for instance, determines the great-circle distance between two points on a sphere given their longitudes and latitudes. However, at short distances the difference would be negligible.

The progress of inferred vehicle I from a trailing position behind the refence vehicle (FIG. 6A) to now ahead of the reference vehicle (FIG. 6B) can be monitored. In one embodiment, the progression of the same inferred vehicle further down the road can be tracked. Moreover, knowledge of the inferred vehicle's lane number can be determined by using the vision algorithm discussed above.

One common problem is the inaccuracy of the reference vehicle's GPS coordinates that makes it difficult to localize to lane-level because the location measurement error in the location data (e.g., GPS error) can be greater than a lane width. However, in one embodiment, the mapping platform 105 can use a probabilistic approach or other equivalent approach to perform LLMM For example, under a probabilistic approach, the mapping platform 105 first uses the raw GPS positions (e.g., links + latitude (lat) and longitude(lon)) for the reference vehicle 101 to create a layer of abstraction over a digital map. In one instance, the mapping platform 105 then uses the abstraction layer (<Link-ID>, <d-value>) to generate lane probabilities of the reference vehicle 101 based on its lateral position (lane distance (d-value)) within a road segment. In one embodiment, the generated lane probabilities form the emission probabilities of a statistical model (e.g., a Hidden Markov Model (HMM)) that the mapping platform 111 can use to make an inference of the actual most probable lane(s) the reference vehicle 101 traversed. In one instance, the mapping platform 105 can use a dynamic programming algorithm (e.g., the Viterbi algorithm) to make this inference. This lane-level probabilistic map-matching can stabilize the location of the reference vehicle 101 to a particular lane. Furthermore, a reference vehicle R can communicate with other reference vehicles R1, R2, etc., around it to make sure the same nearby vehicle is not counted twice. In order to calculate a relative speed of inferred vehicle I to reference vehicle R, the position of vehicle I is tracked at different times.

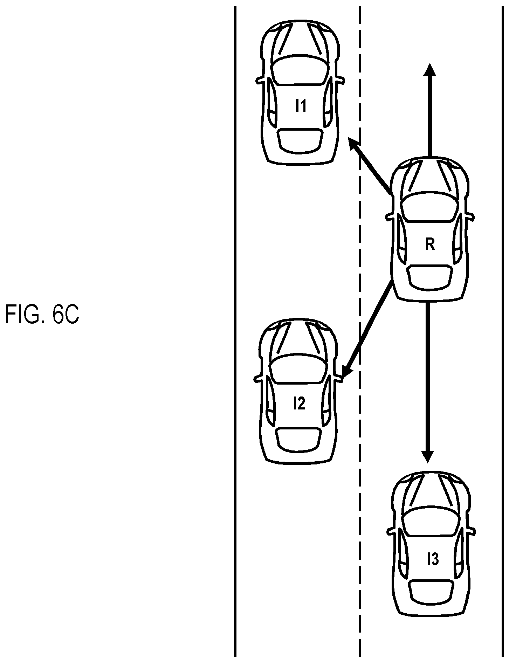

FIG. 6C is a diagram of a reference vehicle R with an inferred vehicle I1 ahead of the reference vehicle R in an adjacent lane. Inferred vehicle 12 is trailing the reference vehicle R in an adjacent lane. Inferred vehicle 13 is trailing the reference vehicle R in the same lane. In this example, it is possible for the mapping platform 105 to create a large number of inferred GPS points (e.g., inferred probe data), even with a small number of reference vehicles, e.g., one reference vehicle R. The volume of vehicles traveling along a road or highway can therefore be more accurately calculated. In addition, other location-based services and applications that require a higher volume probe data can be supported.

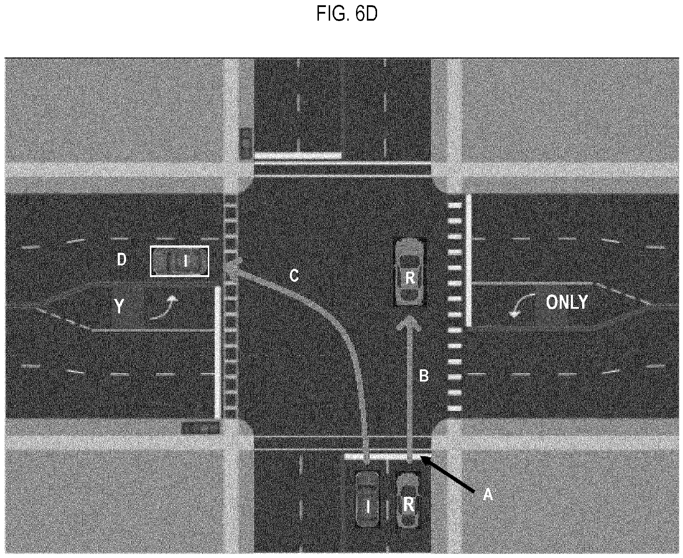

FIG. 6D is a diagram of a reference vehicle R with an inferred vehicle I initially next to each other (point A) before they both traverse an intersection. Reference vehicle R traverses straight across the intersection as shown by directional arrow B. Inferred vehicle I crosses into the intersection and makes a left hand turn, as shown with directional arrow C. In this example, it becomes possible to determine that inferred vehicle I makes a turn at the intersection because the location of the inferred vehicle I changed to being on the intersecting road, i.e., traveling from location point A and turning toward location point D. Accordingly, in one embodiment, tracking the location of vehicles at intersections generates useful data that can be extrapolated to better model traffic flow at intersections.

In summary, in certain embodiments, the sensor data (e.g., image data collected by a reference vehicle and which depicts nearby vehicles) is processed to determine a reference road lane in which the reference vehicle is traveling and a travel lane of the one or more surrounding or nearby vehicles is computed based on the reference road lane of the reference vehicle. In some embodiments, the vehicle location includes the travel lane of the one or more vehicles. The lane-level map matcher module (LLMM) 209 performs the map matching of the reference vehicle 101 which effectively stabilizes the location of the reference vehicle and provides lane information of the reference vehicle 101. By acquiring lane level speed and location information of surrounding vehicles, it is possible to obtain lane level traffic patterns and lane level volume.

In step 305, the vehicle location of the one or more vehicles is provided as an output including the inferred vehicle location data. By way of example, the output can be provided as additional probes in the probe database 103 corresponding vehicles detected by reference vehicles 101 to be traveling on a road segment. In this way, the system 100 advantageously leverages the limited number of reference vehicles 101 operating in a road network to detect and generated probe data for other vehicle encountered in the road network even when those other vehicles are not actively participating in a probe collection scheme (e.g., operating as official probe vehicles or reference vehicle for collecting probe data). In this way, the system 100 solves the technical challenge of increasing the number of available probes (e.g., increasing probe density) without having to directly solicit additional vehicles to actively collect probe data. Returning to FIG. 1, as shown, the system 100 includes vehicle 101 with connectivity to the mapping platform 105 for inferring vehicle location data using a reference vehicle, according to the various embodiments described herein. In one embodiment, the vehicle 101 can include camera sensors 109 or other equivalent vision sensors that provides imagery (e.g., image data, photographs, etc.) of multiple views at different angles as the vehicle 101 travels.

In one embodiment, the reference vehicle 101 is also equipped with location sensors for generating probe data including but not limited to a GPS system or equivalent. For example, the GPS system is a satellite navigation system that provides location information anywhere on or near the Earth's surface. It comprises a number of satellites 123 in orbit above Earth. Each satellite continually transmits messages that include the time the message was transmitted, and the satellite position. On the ground the GPS unit receives these messages and, by comparing the time at which the message was received (on its internal clock) against the time which the message was transmitted, it works out how far away it is from each satellite. In order to calculate its location the GPS unit must receive messages (signals) from a minimum of four satellites. For example, if a GPS unit receives signals from a first and second satellite, upon receiving each signal the GPS unit calculates its distance from satellites one and two. If however, the GPS unit only receives a signal from the first satellite, then it can only determine that its location lies somewhere along a sphere of all locations that are the same distance from the first satellite. When the GPS unit receives signals from both the first and second satellites, it determines its distance from each satellite. Since two signals have been received the GPS unit can narrow the location down to those points where two individual distance spheres (i.e., one for each satellite) intersect. With the introduction of a third satellite the GPS unit further narrows the location down to two points. Only one of these points will be on the Earth's surface and therefore can be discarded by the GPS unit. With just three satellites the GPS unit can triangulate the location. In practice, a fourth satellite is needed to improve accuracy (particularly altitude accuracy) due to errors in measuring the precise time at which each signal was received.

In certain embodiments, as shown in FIG. 4, camera sensors 109 are mounted on four sides of the vehicle 101 to face multiple directions from the vehicle to generate sensor data that includes image data. It is contemplated that each camera sensor 109 can use visible light and/or any other electromagnetic wavelength that can be used for imaging on which inferred vehicle identification and location can be determined. In one embodiment, the system 100 can also include a client terminal 111 (e.g., a user computing device) for access the functions of the mapping platform 105.

In one embodiment, the mapping platform 105, vehicle 101, client terminal 111, and/or other components of the system 100 have access to the geographic database 107 which stores representations of mapped geographic features to facilitate location-based services such as, but not limited to, autonomous driving and/or other mapping/navigation-related applications or traffic services according to the embodiments described herein.

In one embodiment, the mapping platform 105, vehicle 101, client terminal 111, etc. have connectivity over the communication network 121 to the services platform 115 that provides one or more services 117 that can use the output of the inferential location probe data described herein. By way of example, the services 117 may be third party services and include mapping services, traffic estimation services, navigation services, travel planning services, notification services, social networking services, content (e.g., audio, video, images, etc.) provisioning services, application services, storage services, contextual information determination services, location-based services, information-based services (e.g., weather, news, etc.), etc.

In one embodiment, the mapping platform 105, services platform 115, and/or other components of the system 100 may be platforms with multiple interconnected components. The mapping platform 105, services platform 115, etc. may include multiple servers, intelligent networking devices, computing devices, components and corresponding software for providing map-based dynamic inferential location probe data. In addition, it is noted that the mapping platform 105 may be a separate entity of the system 100, a part of the one or more services 117, a part of the services platform 115, or included within the client terminal 111 and/or vehicle 101.

In one embodiment, content providers 119a-119m (collectively referred to as content providers 119) may provide content or data to the geographic database 107, the mapping platform 105, the services platform 115, the services 117, the client terminal 111, and/or the vehicle 101. The content provided may be any type of content, such as map content, textual content, audio content, video content, image content, etc. In one embodiment, the content providers 119 may provide content that may aid in the detecting and location of the inferred vehicles from sensor data and estimating the confidence and/or accuracy of the detected vehicles. In one embodiment, the content providers 119 may also store content associated with the geographic database 107, mapping platform 105, services platform 115, services 117, client terminal 111, and/or vehicle 101. In another embodiment, the content providers 119 may manage access to a central repository of data, and offer a consistent, standard interface to data, such as a repository of the geographic database 107.

In one embodiment, the client terminal 111 and/or vehicle 101 may execute a software application (e.g., application 113) for inferring vehicle location in images for location-based or traffic services according the embodiments described herein. By way of example, the application may also be any type of application that is executable on the client terminal 111 and/or vehicle 101, such as autonomous driving applications, mapping applications, location-based service applications, traffic applications, navigation applications, content provisioning services, camera/imaging application, media player applications, social networking applications, calendar applications, and the like. In one embodiment, the application may act as a client for the mapping platform 105, services platform 115, and/or services 117 and perform one or more functions associated with inferring vehicle location data in images.

By way of example, the client terminal 111 is any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the client terminal 111 can support any type of interface to the user (such as "wearable" circuitry, etc.). In one embodiment, the client terminal 111 may be associated with the vehicle 101 or be a component part of the vehicle 101.

In one embodiment, the client terminal 111 and/or vehicle 101 are configured with various sensors for generating or collecting environmental sensor data (e.g., for processing by the mapping platform 105), related geographic data, etc. including but not limited to, location, optical, radar, ultrasonic, LiDAR, etc. sensors. In one embodiment, the sensed data represent sensor data associated with a geographic location or coordinates at which the sensor data was collected. By way of example, the sensors may include a global positioning sensor for gathering location data (e.g., GPS), a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors 109 may automatically capture map features or attributes that can be placed using distance markers), an audio recorder for gathering audio data, velocity sensors mounted on steering wheels of the vehicles, switch sensors for determining whether one or more vehicle switches are engaged, and the like.

Other examples of sensors of the client terminal 111 and/or vehicle 101 may include light sensors, orientation sensors augmented with height sensors and acceleration sensor (e.g., an accelerometer can measure acceleration and can be used to determine orientation of the vehicle), tilt sensors to detect the degree of incline or decline of the vehicle along a path of travel, moisture sensors, pressure sensors, etc. In a further example embodiment, sensors about the perimeter of the client terminal 111 and/or vehicle 101 may detect the relative distance of the vehicle from a lane or roadway, the presence of other vehicles, pedestrians, traffic lights, potholes and any other objects, or a combination thereof. In one scenario, the sensors may detect weather data, traffic information, or a combination thereof. In one embodiment, the client terminal 111 and/or vehicle 101 may include GPS or other satellite-based receivers to obtain geographic coordinates from satellites for determining current location and time. Further, the location can be determined by visual odometry, triangulation systems such as A-GPS, Cell of Origin, or other location extrapolation technologies. In yet another embodiment, the sensors can determine the status of various control elements of the car, such as activation of wipers, use of a brake pedal, use of an acceleration pedal, angle of the steering wheel, activation of hazard lights, activation of head lights, etc.

In one embodiment, the communication network 121 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

By way of example, the mapping platform 105, services platform 115, services 117, client terminal 111, vehicle 101, and/or content providers 119 communicate with each other and other components of the system 100 using well known, new or still developing protocols. In this context, a protocol includes a set of rules defining how the network nodes within the communication network 121 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically affected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

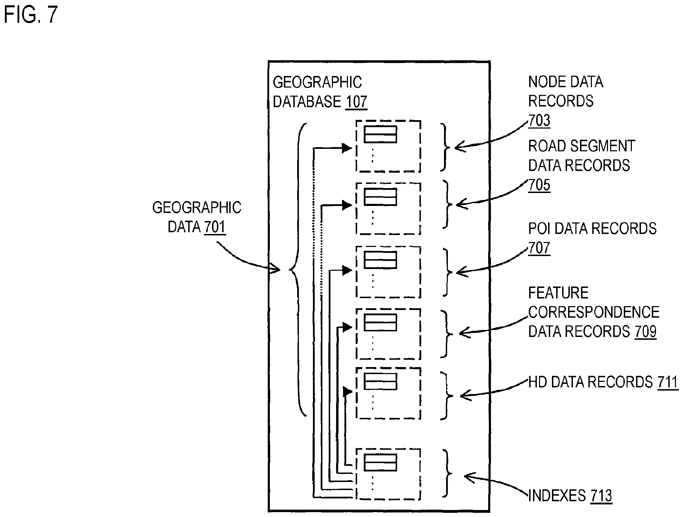

FIG. 7 is a diagram of a geographic database 107, according to one embodiment. In one embodiment, the geographic database 107 includes geographic data 701 used for (or configured to be compiled to be used for) mapping and/or navigation-related services, such as for video odometry such as lane lines, road markings, and signs. In one embodiment, the geographic database 107 includes high resolution or high definition (HD) mapping data that provide centimeter-level or better accuracy of map features. For example, the geographic database 107 can be based on Light Detection and Ranging (LiDAR) or equivalent technology to collect billions of 3D points and model road surfaces and other map features down to the number lanes and their widths. In one embodiment, the HD mapping data (e.g., HD data records 711) capture and store details such as the slope and curvature of the road, lane markings, roadside objects such as sign posts, including what the signage denotes. By way of example, the HD mapping data enable highly automated vehicles to precisely localize themselves on the road.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 107.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 107 follows certain conventions. For example, links do not cross themselves and do not cross each other except at a node. Also, there are no duplicated shape points, nodes, or links. Two links that connect each other have a common node. In the geographic database 107, overlapping geographic features are represented by overlapping polygons. When polygons overlap, the boundary of one polygon crosses the boundary of the other polygon. In the geographic database 107, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 107 includes node data records 703, road segment or link data records 705, POI data records 707, feature correspondence data records 709, HD mapping data records 711, and indexes 713, for example. More, fewer or different data records can be provided. In one embodiment, additional data records (not shown) can include cartographic ("carto") data records, routing data, and maneuver data. In one embodiment, the indexes 713 may improve the speed of data retrieval operations in the geographic database 107. In one embodiment, the indexes 713 may be used to quickly locate data without having to search every row in the geographic database 107 every time it is accessed. For example, in one embodiment, the indexes 713 can be a spatial index of the polygon points associated with stored feature polygons.

In exemplary embodiments, the road segment data records 705 are links or segments representing roads, streets, or paths, as can be used in the calculated route or recorded route information for determination of one or more personalized routes. The node data records 703 are end points corresponding to the respective links or segments of the road segment data records 705. The road link data records 705 and the node data records 703 represent a road network, such as used by vehicles, cars, and/or other entities. Alternatively, the geographic database 107 can contain path segment and node data records or other data that represent pedestrian paths or areas in addition to or instead of the vehicle road record data, for example.

The road/link segments and nodes can be associated with attributes, such as functional class, a road elevation, a speed category, a presence or absence of road features, geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 107 can include data about the POIs and their respective locations in the POI data records 707. The geographic database 107 can also include data about places, such as cities, towns, or other communities, and other geographic features, such as bodies of water, mountain ranges, etc. Such place or feature data can be part of the POI data records 707 or can be associated with POIs or POI data records 707 (such as a data point used for displaying or representing a position of a city).

In one embodiment, the geographic database 107 can also include feature correspondence data records 709 for storing the identified feature correspondences (e.g., image-to-image correspondences, image-to-ground correspondences, etc.), camera geometry parameters, location corrected images, location corrected features, location corrected camera models/poses, as well as other related data used or generated according to the various embodiments described herein. By way of example, the feature correspondence data records 709 can be associated with one or more of the node records 703, road segment records 705, and/or POI data records 707 to support localization or visual odometry based on the features stored therein and the corresponding estimated quality of the features. In this way, the records 709 can also be associated with or used to classify the characteristics or metadata of the corresponding records 703, 705, and/or 707.

In one embodiment, as discussed above, the HD mapping data records 711 model road surfaces and other map features to centimeter-level or better accuracy. The HD mapping data records 711 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the HD mapping data records 711 are divided into spatial partitions of varying sizes to provide HD mapping data to vehicles 101 and other end user devices with near real-time speed without overloading the available resources of the vehicles 101 and/or devices (e.g., computational, memory, bandwidth, etc. resources).

In one embodiment, the HD mapping data records 711 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 711.

In one embodiment, the HD mapping data records 711 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 107 can be maintained by the content provider 119 in association with the services platform 115 (e.g., a map developer). The map developer can collect geographic data to generate and enhance the geographic database 107. There can be different ways used by the map developer to collect data. These ways can include obtaining data from other sources, such as municipalities or respective geographic authorities. In addition, the map developer can employ field personnel to travel by vehicle (e.g., vehicle 101 and/or user equipment) along roads throughout the geographic region to observe features and/or record information about them, for example. Also, remote sensing, such as aerial or satellite photography, can be used.

The geographic database 107 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle 101, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing inferential location estimation using automotive sensors may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

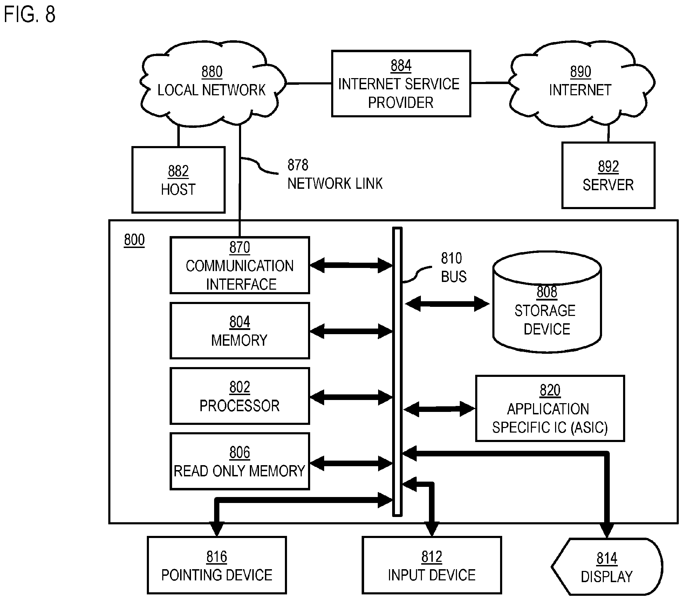

FIG. 8 illustrates a computer system 800 upon which an embodiment of the invention may be implemented. Computer system 800 is programmed (e.g., via computer program code or instructions) to provide inferential location estimation using automotive sensors as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 810 includes one or more parallel conductors of information so that information is transferred quickly among devices coupled to the bus 810. One or more processors 802 for processing information are coupled with the bus 810.

A processor 802 performs a set of operations on information as specified by computer program code related to providing inferential location estimation using automotive sensors. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or other dynamic storage device, stores information including processor instructions for providing inferential location estimation using automotive sensors. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing inferential location estimation using automotive sensors, is provided to the bus 810 for use by the processor from an external input device 812, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT) or a liquid crystal display (LCD), or plasma screen or printer for presenting text or images, and a pointing device 816, such as a mouse or a trackball or cursor direction keys, or motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of application specific ICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 121 for providing inferential location estimation using automotive sensors.

The term computer-readable medium is used herein to refer to any medium that participates in providing information to processor 802, including instructions for execution. Such a medium may take many forms, including, but not limited to, non-volatile media, volatile media and transmission media. Non-volatile media include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

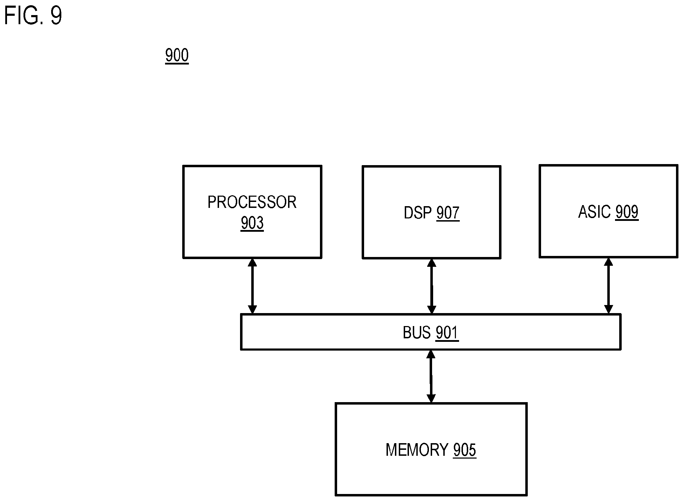

FIG. 9 illustrates a chip set 900 upon which an embodiment of the invention may be implemented. Chip set 900 is programmed to provide inferential location estimation using automotive sensors as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide inferential location estimation using automotive sensors. The memory 905 also stores the data associated with or generated by the execution of the inventive steps.

FIG. 10 is a diagram of exemplary components of a client terminal 111 capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile station functions that offer automatic contact matching. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile station 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003-which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile station 1001 to provide inferential location estimation using automotive sensors. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the station. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile station 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1051 may be, but not limited to, a single memory, CD, DVD, ROM, RAM, EEPROM, optical storage, or any other non-volatile or non-transitory storage medium capable of storing digital data.

An optionally incorporated SIM card 1049 carries, for instance, important information, such as the cellular phone number, the carrier supplying service, subscription details, and security information. The SIM card 1049 serves primarily to identify the mobile station 1001 on a radio network. The card 1049 also contains a memory for storing a personal telephone number registry, text messages, and user specific mobile station settings.

**Claims**

1. A method for inferring vehicle location data using a reference vehicle comprising:

   processing sensor data collected from one or more sensors of the reference vehicle to identify a relative location of one or more vehicles represented in the sensor data, wherein the relative location is with respect to the reference vehicle;
   computing a vehicle location of the one or more vehicles based on the relative location and a reference location of the reference vehicle; and
   providing the vehicle location of the one or more vehicles as an output comprising the inferred vehicle location data.

2. The method of claim 1, wherein the one or more sensors include one or more vision sensors mounted to face one or more directions from the reference vehicle to generate image data, and wherein the sensor data includes the image data.

3. The method of claim 2, wherein the one or more vision sensors include one or more stereoscopic vision sensors.

4. The method of claim 1, further comprising:

   processing the sensor data to determine an angle of the one or more vehicles with respect to a direction of travel of the reference vehicle,

wherein the vehicle location of the one or more vehicles is further based on the angle.

5. The method of claim 1, further comprising:

   initiating a map-matching the reference location to a road link of a geographic database,
   wherein the vehicle location of the one or more vehicles is further based on the map-matching.

6. The method of claim 1, further comprising:

   processing the sensor data to determine a reference road lane in which the reference vehicle is traveling; and
   computing a travel lane of the one or more vehicles based on the reference road lane of the reference vehicle,
   wherein the vehicle location includes the travel lane of the one or more vehicles.

7. The method of claim 1, further comprising:
   processing the sensor data to predict a traffic volume, vehicle speed data for the one or more vehicles, or a combination thereof based on the sensor data, the reference location of the reference vehicle, reference speed data of the reference vehicle, or a combination thereof.

8. The method of claim 1, further comprising:

   processing the sensor data to determine a time of a sensor event through which the sensor data was collected,
   wherein the inferred vehicle location is time-stamped with the time of the sensor event.

9. The method of claim 1, wherein the reference vehicle transmits the reference location of the reference vehicle, the inferred vehicle location data of the one or more vehicles, or a combination thereof as probe data.

10. The method of claim 1, wherein the relative location of the one or more vehicles, the one or more vehicles, or a combination thereof is identified from the sensor data using a computer vision machine learning system.

11. An apparatus for inferring vehicle location data using a reference vehicle comprising:

    at least one processor; and
    at least one memory including computer program code for one or more programs,
    the at least one memory and the computer program code configured to, with the at least one processor, cause the apparatus to perform at least the following:

    process sensor data collected from one or more sensors of the reference vehicle to identify a relative location of one or more vehicles represented in the sensor data, wherein the relative location is with respect to the reference vehicle;
    compute a vehicle location of the one or more vehicles based on the relative location and a reference location of the reference vehicle; and
    provide the vehicle location of the one or more vehicles as an output comprising the inferred vehicle location data.

12. The apparatus of claim 11, wherein the one or more sensors include one or more vision sensors mounted to face one or more directions from the reference vehicle to generate image data, and wherein the sensor data includes the image data.

13. The apparatus of claim 11, wherein the apparatus is further caused to:

    process the sensor data to determine an angle of the one or more vehicles with respect to a direction of travel of the reference vehicle,
    wherein the vehicle location of the one or more vehicles is further based on the angle.

14. The apparatus of claim 11, wherein the apparatus is further caused to:

    initiate a map-matching the reference location to a road link of a geographic database,
    wherein the vehicle location of the one or more vehicles is further based on the map-matching.

**15.** A non-transitory computer-readable storage medium for inferring vehicle location data using a reference vehicle, carrying one or more sequences of one or more instructions which, when executed by one or more processors, cause an apparatus to perform:

processing sensor data collected from one or more sensors of the reference vehicle to identify a relative location of one or more vehicles represented in the sensor data, wherein the relative location is with respect to the reference vehicle;
computing a vehicle location of the one or more vehicles based on the relative location and a reference location of the reference vehicle; and
providing the vehicle location of the one or more vehicles as an output comprising the inferred vehicle location data.

FIG. 1

FIG. 2

MAPPING PLATFORM 105

CAMERA MODULE
201

PROCESSING
MODULE
203

COMMUNICATION
MODULE
205

COMPUTER VISION
ALGORITHM
MODULE
207

LANE-LEVEL
MAP MATCHER
MODULE
209

FIG. 3

<u>300</u>

301 ─┐
┌─────────────────────────────────────┐
│     PROCESS SENSOR DATA TO IDENTIFY  │
│     RELATIVE LOCATIONS OF VEHICLES   │
│     SURROUNDING REFERENCE VEHICLE    │
└─────────────────────────────────────┘

303 ─┐
┌─────────────────────────────────────┐
│   COMPUTE LOCATIONS OF VEHICLES BASED│
│   ON RELATIVE LOCATIONS AND LOCATION OF│
│          REFERENCE VEHICLE           │
└─────────────────────────────────────┘

305 ─┐
┌─────────────────────────────────────┐
│      PROVIDE COMPUTED LOCATIONS AN   │
│     INFERRED VEHICLE LOCATION DATA   │
└─────────────────────────────────────┘

FIG. 4

FIG. 5A

FIG. 5B

STEREO COORDINATE SYSTEM

FIG. 6A

FIG. 6B

FIG. 6C

FIG. 6D

FIG. 7

GEOGRAPHIC
DATABASE 107

NODE DATA
RECORDS
703

ROAD SEGMENT
DATA RECORDS
705

GEOGRAPHIC
DATA 701

POI DATA RECORDS
707

FEATURE
CORRESPONDENCE
DATA RECORDS 709

HD DATA RECORDS 711

INDEXES 713

FIG. 8

FIG. 9

900

PROCESSOR
903

DSP 907

ASIC 909

BUS 901

MEMORY 905

Europäisches
Patentamt

European
Patent Office

Office européen
des brevets

# EUROPEAN SEARCH REPORT

Application Number

EP 20 18 1580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/041416 A1 (DORUM OLE HENRY [US]) 8 February 2018 (2018-02-08)<br><br>* paragraph [0004] - paragraph [0006] *<br>* paragraphs [0030] - [0033], [0038], [0040] *<br>* paragraphs [0045] - [0047], [0049] - [0051] *<br>* paragraphs [0057], [0060], [0062], [0063] *<br>* figures 1-4 * | 1-3, 5-12,14, 15 | INV.<br>G01C21/30<br>G01C21/00<br>G08G1/01 |
| X | EP 2 902 748 A2 (IND TECH RES INST [TW]) 5 August 2015 (2015-08-05)<br>* paragraphs [0006], [0014] *<br>* paragraph [0019] - paragraph [0021] *<br>* paragraphs [0026], [0027] *<br>* figures 1,2,8,9 * | 1-4, 10-13,15 | |
| X | US 2019/078897 A1 (SUMIZAWA AKIO [JP]) 14 March 2019 (2019-03-14)<br>* paragraph [0037] - paragraph [0046] *<br>* paragraph [0104] - paragraph [0109] *<br>* figures 1,5-7 * | 1-6, 10-15 | TECHNICAL FIELDS SEARCHED (IPC)<br><br>G01C<br>G08G<br>H04W |

The present search report has been drawn up for all claims

| Place of search | Date of completion of the search | Examiner |
|---|---|---|
| The Hague | 23 November 2020 | Yosri, Samir |

EPO FORM 1503 03.82 (P04C01)

**ANNEX TO THE EUROPEAN SEARCH REPORT
ON EUROPEAN PATENT APPLICATION NO.**

EP 20 18 1580

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2020

| Patent document cited in search report | | | Publication date | Patent family member(s) | | | Publication date |
|---|---|---|---|---|---|---|---|
| US 2018041416 | A1 | | 08-02-2018 | CN | 109564095 | A | 02-04-2019 |
| | | | | EP | 3494365 | A1 | 12-06-2019 |
| | | | | US | 2018041416 | A1 | 08-02-2018 |
| | | | | WO | 2018024848 | A1 | 08-02-2018 |
| EP 2902748 | A2 | | 05-08-2015 | CN | 104748755 | A | 01-07-2015 |
| | | | | EP | 2902748 | A2 | 05-08-2015 |
| | | | | JP | 5841194 | B2 | 13-01-2016 |
| | | | | JP | 2015125145 | A | 06-07-2015 |
| | | | | TW | 201525507 | A | 01-07-2015 |
| | | | | US | 2015177003 | A1 | 25-06-2015 |
| US 2019078897 | A1 | | 14-03-2019 | CN | 108137045 | A | 08-06-2018 |
| | | | | DE | 112016004370 | T5 | 07-06-2018 |
| | | | | JP | 6657245 | B2 | 04-03-2020 |
| | | | | JP | WO2017065182 | A1 | 02-08-2018 |
| | | | | US | 2019078897 | A1 | 14-03-2019 |
| | | | | WO | 2017065182 | A1 | 20-04-2017 |

EPO FORM P0459

For more details about this annex : see Official Journal of the European Patent Office, No. 12/82